# EUROPEAN PATENT SPECIFICATION

(11) **EP 1 837 213 B1**
(45) Date of publication and mention of the grant of the patent: **18.02.2009**
(21) Application number: 06425200.0
(22) Date of filing: 23.03.2006
(51) Int. Cl.: B60H 1/00

(54) **A ventilation unit for an air-flow treatment assembly for vehicles**
Gebläseeinheit für Kraftfahrzeugluftstrombehandlungsanordnung
Unité de ventilation pour un dispositif de traitement d'air pour véhicule

(43) Date of publication of application: 26.09.2007
(73) Proprietor: DENSO THERMAL SYSTEMS S.p.A., 10046 Poirino (Torino) (IT)
(72) Inventor: Cigaina, Alberto c/o Denso Termal Systems Spa, I-10146 Poirino (Torino) (IT)
(74) Representative: Marchitelli, Mauro

(56) References cited:
- EP-A- 0 444 551
- FR-A- 2 781 844
- US-A- 5 111 738
- PATENT ABSTRACTS OF JAPAN vol. 013, no. 582 (M-911), 21 December 1989 (1989-12-21) & JP 01 244912 A (HITACHI LTD), 29 September 1989 (1989-09-29)

## Description

The present invention relates to a modular system for producing different models of ventilation units for air treatment assemblies for vehicles.

Ventilation units change from one vehicle model to another essentially to enable inserting into the passenger compartment of a vehicle a different maximum volumetric flow rate of air according to the dimensions of the passenger compartment. The different models of ventilation units and their management and production systems have always been obtained starting from different design bases.

Document US 5111-738, which is considered as the closest prior art, discloses such a ventilation unit.

The current tendency of automotive manufacturers is to use standard components for different vehicle models, in order to reduce costs thanks to economies of scale. In the specific case of ventilation units, the need is to provide ventilation units that can be mounted not just on variants of a same vehicle model, but also on vehicle types that are radically different from each other, e.g. on a compact car, a mid-class vehicle, a minivan, etc.

The object of the present invention is to provide a modular ventilation unit that enables to meet the aforesaid need.

According to the present invention, said object is achieved by a modular system having the characteristics set out in the claims.

In particular according to the present invention the structural characteristics of the ventilation unit able to define different volumetric air flow rates for each ventilation unit of the modular systems have been identified in the motor support and in the centrifugal fan which have been configured as autonomous modular elements, interchangeable with other modular elements of the same category. These modular elements are operatively associated to a same support case, in order to provide different models of ventilation units.

The present invention shall now be described in detail with reference to the accompanying drawings, provided purely by way of non limiting example, in which:
- Figures 1 and 2 are perspective views of two different groups of ventilation units obtained with the modular system according to the present invention,
- Figure 3 is a section according to the line III-III of Figure 1,
- Figure 4 is a section according to the line IV-IV of Figure 2,
- Figure 5 is a perspective view showing two components of the ventilation unit according to the invention, and
- Figures 6a and 6b are perspective views of two types of a modular component of the ventilation unit according to the invention.

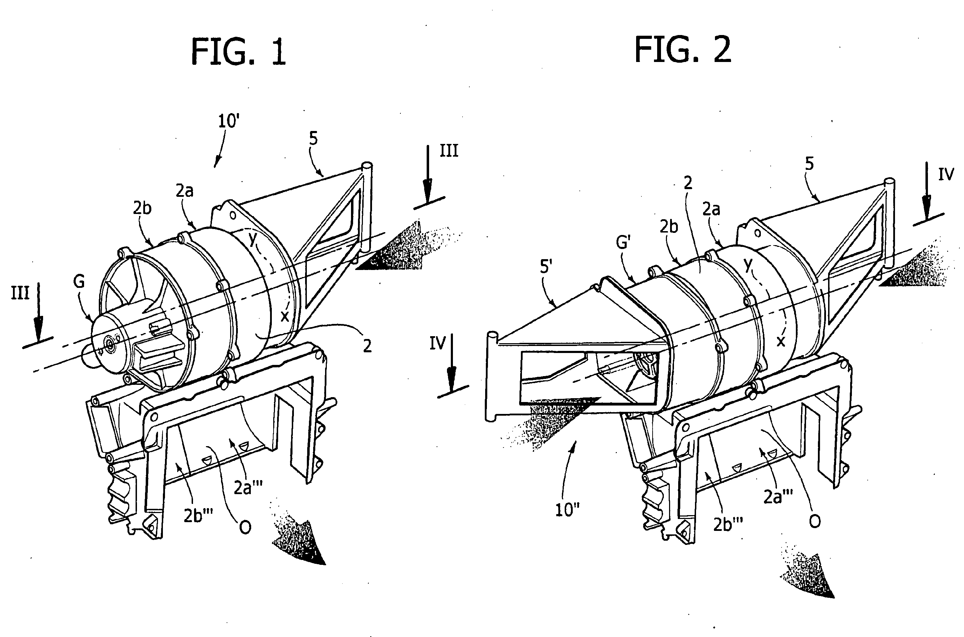

With reference to Figures 1 and 2, the numbers 10' and 10" designate two different ventilation units able to be mounted on two vehicles having radically different characteristics.

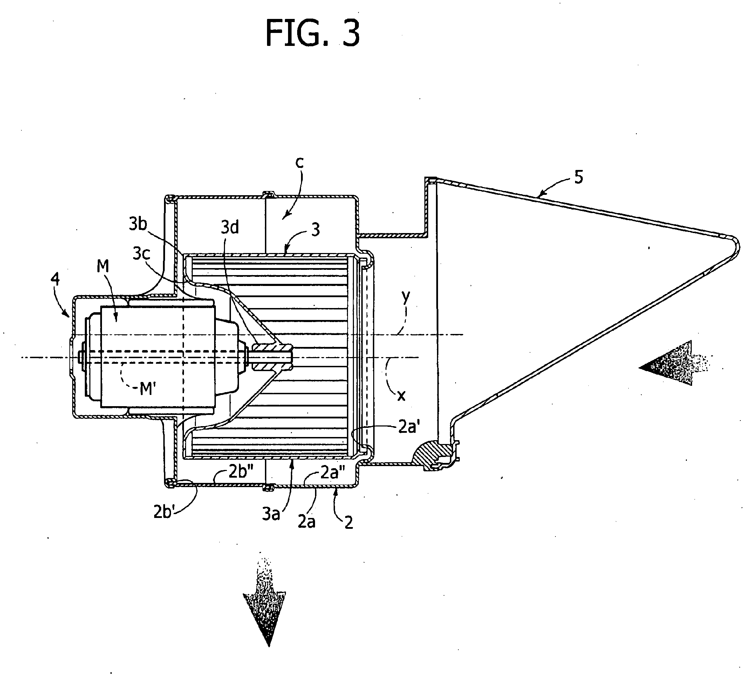

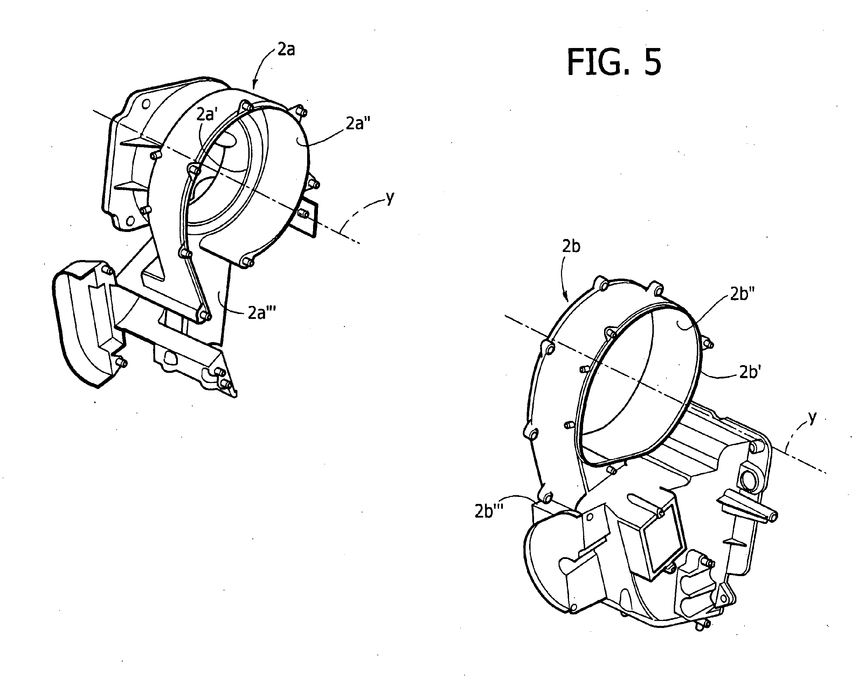

The two ventilation units 10' and 10" have a support case 2 which constitutes a unique element of the modular system according to the invention. Said support case 2 is formed by two mutually assembled shells 2a, 2b (Figure 5). Each of these shells 2a, 2b has a lateral opening 2a', 2b' whereat extend tubular portions 2a" and 2b" which, when the shells are assembled together, constitute a cylindrical ventilation chamber C (Figure 3). In said chamber is housed a centrifugal fan 3,3' able to create a flow of air. Said fan has its blades which globally form a cylindrical body 3a,3a' which, when it is housed within the ventilation chamber, has its main axis X positioned offset and parallel relative to the main axis Y of the ventilation chamber, so that the space between the centrifugal fan 3, 3' and the case 2 has a development with increasing section in the direction of the air flow.

Two portions 2a"' and 2b"' respectively of the shells 2a and 2b are so shaped that when these shells are coupled they constitute an output conduit O positioned downstream of the ventilation chamber C, with reference to the direction of the air flow. This conduit is located at the greater section of the space obtained between the ventilation chamber C and the centrifugal fan 3.

Figure 3 shows a first model of ventilation unit. In said model, the centrifugal fan 3 has its blades connected at their proximal ends 3b to a flange 3c which projects with conical development inside the fan substantially to half the length of the cylindrical body 3a of the fan. The flange 3c has in its central portion a hub 3d able to be coupled integrally with a shaft M' of an electric motor M. Said fan 3 constitutes a modular element of the modular system of the invention and in this first model of ventilation unit it is able to aspirate air axially relative to its cylindrical body 3a only from the distal end part of its blades.

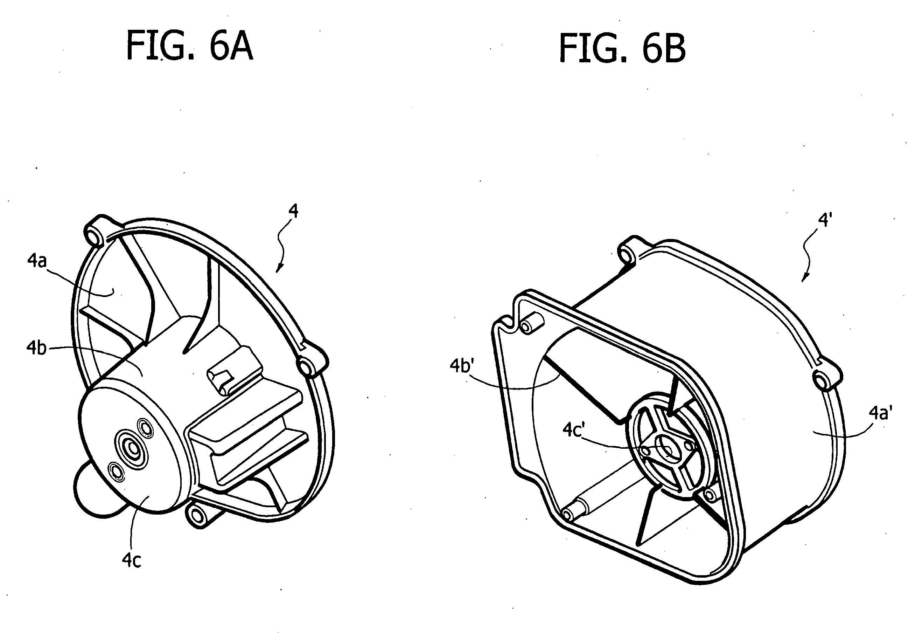

The electric motor M is sustained by a motor support 4 which is fastened to the support case 2 at the lateral opening 2b' of the shell 2b. The motor support 4 (Figure 6a) is a second modular element of the modular system according to the invention. In this first model of ventilation unit the motor support 4 is formed by an outer flange 4a which surrounds a tubular element 4b closed by a bottom wall 4c. The tubular element 4b defines a seat able to receive the electric motor M. When the motor support 4 is mounted, together with the electric motor M, on the case 2, the lateral opening 2b' of the shell 2b is completely closed.

At the opening 2a' of the shell 2a is mounted an air intake 5 able to constitute an inlet conduit for the air flow.

The first model 10' of ventilation unit constitutes a single-inlet ventilation unit. The air flow enters from the air intake 5, is aspirated into the ventilation chamber C and exits the ventilation unit through the outlet conduit O.

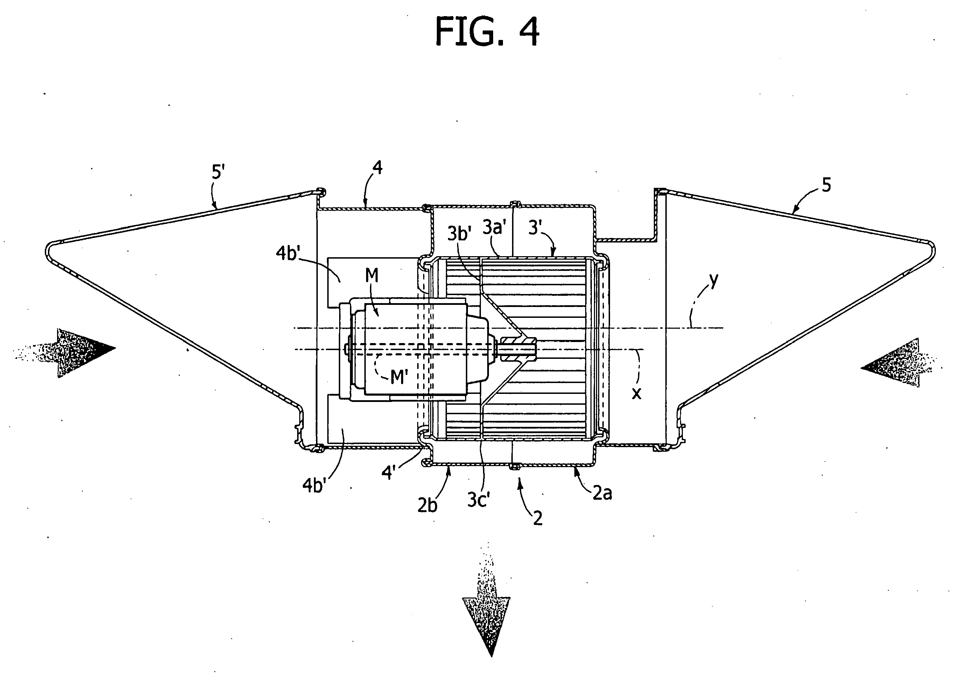

Figure 4 shows a second model of ventilation unit 10". The centrifugal fan 3' of this second model 10" has a flange 3b' inside the cylindrical body 3a' connected to the blades thereof at an intermediate point 3c' of their longitudinal extension. The flange 3b' identifies two distinct ventilation portions of the centrifugal fan. In this second model 10" of ventilation unit the fan 3' is able to aspirate air axially relative to its cylindrical body 3a' from both ends of its blades.

At the opening 2a' of the shell 2a is mounted an air intake 5 able which constitutes a first inlet conduit for the air flow.

The motor support 4' (Figure 6b) of this second model comprises a tubular element 4a' having in its interior a spoke structure 4b' on whose central portion is present a support plate 4c' able to house the electric motor M. The motor support 4' is fastened to the support case 2 at the opening 2b' of the shell 2b and it allows the passage of the air flow coming from a second air intake 5' mounted at the same opening 2b'. The air intake 5' constitutes a second inlet conduit for the air flow. The second model 10" of ventilation unit thus constitutes a two-inlet ventilation unit. The air flow enters from the two air intakes 5 and 5', is aspirated into the ventilation chamber C and exits from the outlet conduit O.

The modular system for the production of the two different models of ventilation unit thus comprises a single type of support case 2 and two different types of centrifugal fan 3,3' and of motor support 4,4'. There will therefore be a single mould of the two shells, which form the support case 2, for the two models of ventilation unit and two different moulds of the motor support and of the centrifugal fan, specific for each model of ventilation unit.

Thanks to the modular ventilation unit and to the modular system according to the present invention, two different models of ventilation unit are obtained which nonetheless are based on a common management of warehouses and of production. The management of the warehousing and production of these models are thus simplified and strongly improved in efficiency, thereby obtaining a considerable cost reduction.

## Claims

1. Modular system for the production of different models of ventilation units for air treatment assemblies for vehicles, comprising:
- a support case (2) defining at least one air intake opening (2a',2b'), a ventilation chamber (C) and an outlet conduit of the air flow (0) arranged mutually in series with reference to the direction of the air flow;
- an electric motor (M) housed in the support case (2) and sustained by a motor support (4,4') fastened to said support case (2);
- a centrifugal fan (3,3') actuated by said electric motor (M) and positioned inside said ventilation chamber (C);
**characterised in that** it comprises:
- a single type of support case (2),
- a plurality of types of motor support (4,4') and centrifugal fan (3,3'),
the pluralities of types of motor support (4,4') and centrifugal fan (3,3') being all able to be operatively associated to the single type of support case (2).

2. System as claimed in claim 1, **characterised in that** the motor support (4) of a first type comprises an outer flange (4a) surrounding a tubular element (4b), on said tubular element being obtained a seat able to receive said electric motor (M).

3. System as claimed in claim 1, **characterised in that** the motor support (4') of a second type comprises a tubular element (4a') having in its interior a spoke structure (4b') on whose central portion is present a support plate able to house the electric motor (M), said motor support (4') allowing the passage of a flow of air inside said ventilation unit.

4. System as claimed in claim 1, **characterised in that** the centrifugal fan of a first type has its blades connected at their proximal ends (3b) to a flange (3c) which projects with conical development inside the fan (3).

5. System as claimed in claim 1, **characterised in that** the centrifugal fan of a second type has a flange (3b') inside the cylindrical body (3a') connected to the blades thereof at an intermediate point (3c') of their longitudinal extension, thereby identifying two distinct ventilation portions of the centrifugal fan.

6. System as claimed in claim 5, **characterised in that** said intermediate point (3c') is closer to the ends of the blades that face the motor support (4') that to the ends of the blades that face the air intake (5).

7. System as claimed in claim 1, **characterised in that** said support case (2) is formed by two mutually assembled shells (2a, 2b).

8. System as claimed in claim 7, **characterised in that** each of said shells (2a,2b) has a lateral opening (2a',2b'), at least one of which is able to constitute an air intake opening of said ventilation unit.

9. System as claimed in claim 8, **characterised in that** at least at one of said lateral openings (2a',2b') is mounted an air intake (5) able to constitute an inlet conduit of the air flow.

10. System as claimed in claim 8, **characterised in that** said shells (2a,2b) at said lateral opening (2a',2b') have respective tubular portions (2a",2b") in such a way that when assembled together they form the aforesaid ventilation chamber (C).

11. System as claimed in claim 7, **characterised in that** said shells (2a,2b) have a portion downstream of said ventilation chamber (C) so shaped that when said shells (2a,2b) are assembled together they constitute said outlet conduit (0) of the air flow.

## Patentansprüche

1. Modulares System für die Herstellung unterschiedlicher Modelle von Gebläseeinheiten für Luftaufbereitungsanordnungen in Kraftfahrzeugen, enthaltend:
ein Haltegehäuse (2), das wenigstens eine Lufteinlassöffnung (2a', 2b') eine Gebläsekammer (C) und eine Auslassleitung des Luftstroms (O) begrenzt, die im Bezug auf die Richtung des Luftstroms in Reihe zueinander angeordnet sind;
einen Elektromotor (M), der sich im Haltegehäuse (2) befindet und durch eine Motorhalterung (4, 4') aufgehängt ist, die am Haltegehäuse (2) befestigt ist;
ein Zentrifugalgebläse (3, 3'), das vom Elektromotor (M) betätigt wird und sich innerhalb der Gebläsekammer (C) befindet;
**dadurch gekennzeichnet, dass** es enthält:
einen einzigen Typ des Haltegehäuses (2),
eine Vielzahl von Typen der Motorhalterung (4, 4') und des Zentrifugalgebläses (3,3'),
wobei die Vielzahl von Typen der Motorhalterung (4, 4') und des Zentrifugalgebläses (3, 3') allesamt dem einzelnen Typ des Haltegehäuses (2) zugeordnet werden können.

2. System nach Anspruch 1, **dadurch gekennzeichnet, dass** die Motorhalterung (4) eines ersten Typs einen Außenflansch (4a) enthält, der ein röhrenförmiges Element (4b) umgibt, wobei sich auf dem röhrenförmigen Element ein Sitz befindet, der den Elektromotor (M) aufnehmen kann.

3. System nach Anspruch 1, **dadurch gekennzeichnet, dass** die Motorhalterung (4') eines zweiten Typs ein röhrenförmiges Element (4a') enthält, das in seinem Inneren einen Speichenaufbau (4b') aufweist, an dessen zentralem Abschnitt sich eine Trägerplatte befindet, die den Elektromotor (M) aufnehmen kann, wobei die Motorhalterung (4') den Durchgang eines Luftstroms innerhalb der Gebläseeinheit gestattet.

4. System nach Anspruch 1, **dadurch gekennzeichnet, dass** die Lamellen des Zentrifugalgebläses des ersten Typs an ihren proximalen Enden (3b) mit einem Flansch (3c) verbunden sind, der konisch innerhalb des Gebläses (3) hervorragt.

5. System nach Anspruch 1, **dadurch gekennzeichnet, dass** das Zentrifugalgebläse eines zweiten Typs einen Flansch (3b') innerhalb des zylindrischen Körpers (3a') aufweist, der mit den Lammellen desselben an einem Zwischenpunkt (3c') ihrer Längsausdehnung verbunden ist, wodurch zwei getrennte Gebläseabschnitte des Zentrifugalgebläses **gekennzeichnet** sind.

6. System nach Anspruch 5, **dadurch gekennzeichnet, dass** der Zwischenpunkt (3c) dichter an den Enden der Lamellen liegt, die der Motorhalterung (4') zugewandt sind, als an den Enden der Lamellen, die dem Lufteinlass (5) zugewandt sind.

7. System nach Anspruch 1, **dadurch gekennzeichnet, dass** das Haltegehäuse (2) durch zwei miteinander verbundene Schalen (2a, 2b) ausgebildet ist.

8. System nach Anspruch 7, **dadurch gekennzeichnet, dass** jede der Schalen (2a, 2b) eine seitliche Öffnung (2a', 2b') aufweist, von denen wenigstens eine eine Lufteinlassöffnung der Gebläseeinheit bilden kann.

9. System nach Anspruch 8, **dadurch gekennzeichnet, dass** wenigstens an einer der seitlichen Öffnungen (2a', 2b') ein Lufteinlass (5) angebracht ist, der eine Einlassleitung für den Luftstrom bilden kann.

10. System nach Anspruch 8, **dadurch gekennzeichnet, dass** die Schalen (2a, 2b) an der seitlichen Öffnung (2a', 2b') entsprechende röhrenförmige Abschnitte (2a", 2b") derart aufweisen, dass sie, wenn sie zusammengesetzt sind, die zuvor erwähnte Gebläsekammer (C) ausbilden.

11. System nach Anspruch 7, **dadurch gekennzeichnet, dass** die Schalen (2a, 2b) einen Abschnitt stromabwärts der Gebläsekammer (C) aufweisen, der so ausgebildet ist, dass, wenn die Schalen (2a, 2b) zusammengesetzt sind, diese die Auslassleitung (O) des Luftstroms bilden.

## Revendications

1. Système modulaire pour la production de différents modèles d'unités de ventilation pour des ensembles de traitement d'air pour véhicules, comprenant :
un boîtier de support (2) définissant au moins une ouverture d'admission d'air (2a', 2b'), une chambre de ventilation (C) et un conduit de sortie de l'écoulement d'air (O) agencés mutuellement en série en référence à la direction de l'écoulement d'air ;
un moteur électrique (M) logé dans le boîtier de support (2) et maintenu par un support de moteur (4, 4') fixé audit boîtier de support (2) ;
un ventilateur centrifuge (3, 3') actionné par ledit moteur électrique (M) et positionné à l'intérieur de ladite chambre de ventilation (C) ;
**caractérisé en ce qu'**il comprend :
un type unique de boîtier de support (2),
une pluralité de types de support de moteur (4, 4') et de ventilateur centrifuge (3, 3'),
les pluralités de types de support de moteur (4, 4') et de ventilateur centrifuge (3, 3') pouvant être associées de manière opérationnelle au type unique de boîtier de support (2).

2. Système selon la revendication 1, **caractérisé en ce que** le support de moteur (4) d'un premier type comprend un rebord externe (4a) entourant un élément tubulaire (4b), obtenant ainsi sur ledit élément tubulaire, un siège pouvant recevoir ledit moteur électrique (M).

3. Système selon la revendication 1, **caractérisé en ce que** le support de moteur (4') d'un second type comprend un élément tubulaire (4a') ayant dans son intérieur une structure de rayon (4b') sur la partie centrale de laquelle on trouve une plaque de support pouvant loger le moteur électrique (M), ledit support de moteur (4') permettant le passage d'un écoulement d'air à l'intérieur de ladite unité de ventilation.

4. Système selon la revendication 1, **caractérisé en ce que** le ventilateur centrifuge d'un premier type a ses aubes raccordées au niveau de leurs extrémités proximales (3b) à un rebord (3c) qui fait saillie avec le développement conique à l'intérieur du ventilateur (3).

5. Système selon la revendication 1, **caractérisé en ce que** le ventilateur centrifuge d'un second type a un rebord (3b') à l'intérieur du corps cylindrique (3a') raccordé à ses aubes au niveau d'un point intermédiaire (3c') de leur extension longitudinale, identifiant ainsi deux parties de ventilation distinctes du ventilateur centrifuge.

6. Système selon la revendication 5, **caractérisé en ce que** ledit point intermédiaire (3c') est plus près des extrémités des aubes qui font face au support de moteur (4') que des extrémités des aubes qui font face à l'admission d'air (5).

7. Système selon la revendication 1, **caractérisé en ce que** ledit boîtier de support (2) est formé par deux coques (2a, 2b) mutuellement assemblées.

8. Système selon la revendication 7, **caractérisé en ce que** chacune desdites coques (2a, 2b) a une ouverture latérale (2a', 2b'), dont au moins une peut constituer une ouverture d'admission d'air de ladite unité de ventilation.

9. Système selon la revendication 8, **caractérisé en ce qu'**au moins l'une desdites ouvertures latérales (2a', 2b') est montée sur une admission d'air (5) pouvant constituer un conduit d'entrée de l'écoulement d'air.

10. Système selon la revendication 8, **caractérisé en ce que** lesdites coques (2a, 2b) au niveau de ladite ouverture latérale (2a', 2b') ont des parties tubulaires (2a", 2b") respectives de sorte que lorsqu'elles sont assemblées, elles forment la chambre de ventilation (C) mentionnée précédemment.

11. Système selon la revendication 7, **caractérisé en ce que** lesdites coques (2a, 2b) ont une partie en aval de ladite chambre de ventilation (C) formée de sorte que lorsque lesdites coques (2a, 2b) sont assemblées, elles constituent ledit conduit de sortie (O) de l'écoulement d'air.
